# EUROPEAN PATENT APPLICATION

(11) **EP 4 589 669 A1**
(43) Date of publication of application: **23.07.2025**
(21) Application number: 23864994.1
(22) Date of filing: 01.06.2023
(51) Int. Cl.: H01M 4/02, H01G 11/26, H01G 11/74, H01M 4/13, H01M 10/04, H01M 10/0587, H01M 50/531

(54) **ELECTRODE PLATE FOR POWER STORAGE DEVICE AND POWER STORAGE DEVICE**

(30) Priority: 15.09.2022 JP 2022147291
(71) Applicant: Panasonic Energy Co., Ltd., Osaka 570-8511 (JP)
(72) Inventor: FUKUTOMI, Yuta, Kadoma-shi, Osaka 570-0057 (JP); SATO, Eisuke, Kadoma-shi, Osaka 570-0057 (JP); YOKOI, Kenta, Kadoma-shi, Osaka 570-0057 (JP)
(74) Representative: Eisenführ Speiser
(86) International application number: PCT/JP2023/020506
(87) International publication number: WO 2024/057630

(57) **Abstract**

A disclosed electrode plate 21 for power storage device use includes a current collector 22 in an elongated sheet-like shape having a first main surface 23 and a second main surface 25, and a first active material layer 27 provided on the first main surface 23. The first main surface 23 has at least one first region R1 that extends in the widthwise direction of the current collector 22 and on which the thickness of the first active material layer 27 is smaller than that at the periphery thereof. The first active material layer 27 is provided in at least a part of the first region R7. With the above configuration, electrolyte permeability can be increased.

## Description

### [Technical Field]

The present disclosure relates to an electrode plate for power storage device use and a power storage device.

### [Background Art]

There is a known conventional electrode plate for power storage device use that is used for a power storage device such as a secondary battery (e.g., Patent Literature 1). The electrode plate for power storage device use of Patent Literature 1 includes a substantially rectangular current collector and an active material layer provided on at least one of the surfaces of the current collector. The at least one surface has an uncoated portion (plain portion) that is located at one end in the widthwise direction of the current collector in a specific region in the longitudinal direction thereof, and on which the active material layer is not provided. The uncoated portion has an outer edge coinciding with a part of the outer edge of the current collector, two widthwise extending edges that are connected to the end points of the outer edge, and an inner edge that connects the two widthwise extending edges.

### [Citation List]

### [Patent Literature]

[Patent Literature 1] Japanese Laid-Open Patent Publication No. 2018-206465

### [Summary of the invention]

### [Technical Problem]

As illustrated in, for example, FIG. 3 of Patent Literature 1, the active material layer is adj acent to the inner edge of the uncoated portion. The dimension of the uncoated portion is much smaller than the dimension of the active material layer adjacent to the uncoated portion in the widthwise direction of the current collector. In the above configuration, there is a large area in the electrode plate for power storage device use where the active material layer is present over the entire length of the current collector. When a wound electrode body is produced with the electrode plate for power storage device use such as above, no voids are formed in almost all part of the electrode body in the axial direction, which makes it difficult to achieve sufficient electrolyte permeation. In consideration of such circumstances, one object of the present disclosure is to increase electrolyte permeability.

### [Solution to Problem]

One aspect of the present disclosure relates to an electrode plate for power storage device use. The electrode plate for power storage device use includes a current collector in an elongated sheet-like shape having a first main surface and a second main surface; and a first active material layer provided on the first main surface, wherein the first main surface has at least one first region that extends in a widthwise direction of the current collector and in which the thickness of the first active material layer is smaller than that at a periphery thereof, and the first active material layer is provided on at least a part of the first region.

Another aspect of the present disclosure relates to a power storage device. The power storage device includes an electrode body formed of a first electrode plate and a second electrode plate wound with a separator therebetween, wherein the first electrode plate is the above-described electrode plate for power storage device use.

### [Advantageous Effects of Invention]

According to the present disclosure, electrolyte permeability can be increased.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] FIG. 1 is a schematic longitudinal cross-sectional view of an example of a power storage device according to the present disclosure.
[FIGS. 2A to 2C] FIGS. 2A to 2C are diagrams illustrating the periphery of a first region of a positive electrode plate, wherein FIG. 2A is a front view, FIG. 2B is a cross-sectional view taken along a line IIB-IIB, and FIG. 2C is a cross-sectional view taken along a line IIC-IIC.

### [Description of Embodiments]

Embodiments of an electrode plate for power storage device use and a power storage device according to the present disclosure are described below by way of example. However, the present disclosure is not limited to the examples described below. In the following description, specific numerical values and materials may be exemplified in some cases, but other numerical values and other materials may be adopted as long as the effects of the present disclosure can be obtained.

### (Electrode Plate for Power Storage Device Use)

The electrode plate for power storage device use (hereinafter referred to simply as electrode plate) according to the present disclosure can be used as a positive electrode plate or a negative electrode plate of a power storage device. The electrode plate according to the present disclosure includes a current collector and a first active material layer. The type of the power storage device is not limited particularly. However, a case of a lithium-ion secondary battery is mainly described below as an example.

The current collector is formed in an elongated sheet shape and has a first main surface and a second main surface. When used as a positive electrode current collector of a lithium-ion secondary battery, the current collector may be constituted by an aluminum foil or an aluminum alloy foil. When used as a negative electrode current collector of a lithium-ion secondary battery, the current collector may be constituted by a copper foil or a copper alloy foil.

The first active material layer is provided on the first main surface. The first active material layer, when it serves as a positive electrode active material layer of a lithium-ion secondary battery, may contain a positive electrode active material (e.g., a lithium-containing transition metal oxide), a conductive agent, and a binder, for example. The first active material layer, when it serves as a negative electrode active material layer of a lithium-ion secondary battery, may contain a negative electrode active material (e.g., a carbonaceous material and a silicon-containing material), a conductive agent, and a binder, for example.

The first main surface of the current collector has at least one first region. The first region is an area that extends in the widthwise direction of the current collector and in which the thickness of the first active material layer is smaller than that at the periphery thereof. The first active material layer is provided on at least a portion of the first region. The first region may extend in the widthwise direction of the current collector over the entire length of the first main surface, or in a part of the first main surface. When a wound electrode body is produced with the electrode plate having the first region such as above, a gap extending in the axial direction of the electrode body is formed at the position where first region is located. With the gap, electrolyte permeability can be increased. In addition, the first region, which has a lower rigidity than the periphery thereof, can be used for adjustment in electrode plate winding, thereby achieving accurate winding.

The first region may include a first uncoated portion that is located at one end of the current collector in the widthwise direction and on which the first active material layer is not provided. The first uncoated portion may be provided for attaching an electrode tab to the electrode plate. The first region with the above configuration includes the first uncoated portion and a first active material layer that is located adjacent to the first uncoated portion and that is thinner than the periphery thereof. The first uncoated portion is a portion that does not originally contribute to capacity expression of a power storage device, and can be effectively utilized in formation of the first region in the present disclosure. The first uncoated portion may be formed by intermittently applying a paste-like active material slurry to the first main surface.

To the first uncoated portion, a first electrode tab may be attached. In the longitudinal direction of the current collector, the length of the first uncoated portion may be larger than the length of the first electrode tab. According to the relationship between the lengths, a gap extending in the axial direction of the electrode body is likely to be formed in at least a part of the first uncoated portion when a wound electrode body is produced. As a result, electrolyte permeability can be further increased.

The first region may extend from one end to the other end of the current collector in the widthwise direction on the first main surface. In the above configuration, a gap may be formed in the first region over the entire axial length of a wound electrode body produced with the electrode plate. As a result, electrolyte permeability can be further increased.

The minimum thickness of the first active material layer provided in the first region may be 95% or more and 99.5% or less of the maximum thickness of the first active material layer. When the minimum thickness is 95% or more of the maximum thickness, capacity expressed by the first active material layer in the first region can be maintained sufficiently high. When the minimum thickness is 99.5% or less of the maximum thickness, a gap for prompting electrolyte permeation can be sufficiently ensured in a wound electrode body produced with the electrode plate.

The electrode plate for power storage device use may further include a second active material layer provided on the second main surface. The second main surface may have at least one second region that extends in the widthwise direction of the current collector and on which the thickness of the second active material layer is smaller than that at the periphery thereof. The second active material layer may be provided on at least a part of the second region. The composition of the second active material layer may be the same as or different from the composition of the first active material layer. Also in the above configuration, electrolyte permeability can be increased as in first region.

The second region may include a second uncoated portion that is located at one end of the current collector in the widthwise direction and on which the second active material layer is not provided. The second uncoated portion may be provided for welding an electrode tab to the first uncoated portion. The second region with the above configuration includes the second uncoated portion and a second active material layer that is located adjacent to it and that is thinner than the second active material layer in the periphery. The second uncoated portion is a portion that does not originally contribute to capacity expression of a power storage device, and can be effectively utilized in formation of the second region in the present disclosure.

The second region may extend from one end to the other end of the current collector in the widthwise direction on the second main surface. In the above configuration, a gap may be formed in the second region over the entire axial length of a wound electrode body produced with the electrode plate. As a result, electrolyte permeability can be further increased.

The minimum thickness of the second active material layer provided in the second region may be 95% or more and 99.5% or less of the maximum thickness of the second active material layer. When the minimum thickness is 95% or more of the maximum thickness, capacity expressed by the second active material layer in the second region can be maintained sufficiently high. When the minimum thickness is 99.5% or less of the maximum thickness, a gap for prompting electrolyte permeation can be sufficiently ensured in a wound electrode body produced with the electrode plate.

At least a part (e.g., 50% or more, 60% or more, 70% or more, 80% or more, or 90% or more) of the first region may overlap with the second region when viewed in the normal direction of the first main surface. In this case, rigidity of parts where the first region and the second region are located can be set low, which facilitates highly accurate production through winding of the electrode body.

### (Power Storage Device)

A power storage device according to the present disclosure may be a battery or a capacitor. The battery may be a primary battery such as a lithium primary battery, or may be a nonaqueous electrolyte secondary battery such as an alkaline storage battery (e.g., nickel-hydride battery or nickelcadmium battery), a lithium-ion secondary battery, a lithium metal secondary battery, or an all-solid-state battery. The power storage device according to the present disclosure includes an electrode body.

The electrode body is formed of a first electrode plate and a second electrode plate wound with a separator therebetween. The outer shape of the electrode body may be a cylindrical shape or a prismatic shape, for example. One of the first electrode plate and the second electrode plate is a positive electrode plate, and the other of the first electrode plate and the second electrode plate is a negative electrode plate. The first electrode plate is the electrode plate for power storage device use according to the present disclosure. The separator may be constituted by a porous sheet having ion permeability and insulating properties. Examples of the porous sheet include thin films having micropores, woven fabrics, and nonwoven fabrics.

According to present disclosure, provision of the first region where the first active material layer has a small thickness as described above makes it possible to increase electrolyte permeability when a wound electrode body is produced with the electrode plate. Further, according to present disclosure, accurate electrode body winding can be achieved by taking advantage of the lower rigidity of the first region.

Hereinafter, examples of the electrode plate for power storage device use and the power storage device according to the present disclosure will be specifically described with reference to the accompanying drawings. The above-described elements of configuration are applicable to the elements of configuration of the electrode plate for the power storage device use and the power storage device in the examples described below. The elements of configuration of the electrode plate for power storage device use and the power storage device described below can be altered based on the above description. Further, the matters described below may be applied to the above-described embodiments. Among the elements of configuration of the electrode plate for power storage device use and the power storage device described below, any elements of configuration that are not essential to the electrode plate for power storage device use or the power storage device according to the present disclosure may be omitted. It should be noted that the drawings indicated below are schematic and do not accurately reflect the shape or number of actual members.

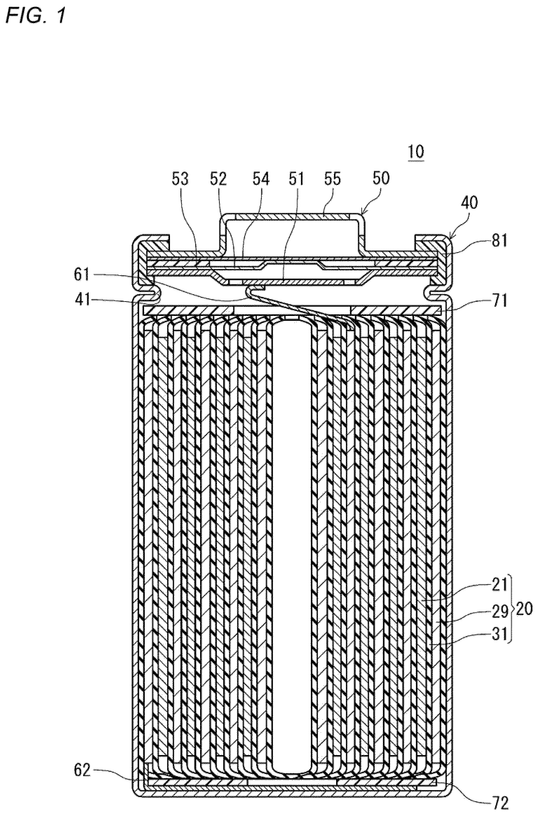

A power storage device 10 of the present embodiment is configured as, but is not limited to, a lithium-ion secondary battery. As illustrated in FIG. 1, the power storage device 10 includes an electrode body 20, a case 40, a sealing body 50, a positive electrode tab 61, and a negative electrode tab 62.

The electrode body 20 includes a positive electrode plate 21, a negative electrode plate 29, and a separator 31. Each of the positive electrode plate 21, the negative electrode plate 29, and the separator 31 has an elongated sheet shape (or a band shape). The elongated sheet-shaped positive electrode plate 21 and the elongated sheet-shaped negative electrode plate 29 are spirally wound with the separator 31 therebetween so that the widthwise directions of the positive electrode plate 21 and the negative electrode plate 29 are parallel to the winding axis. A first insulating plate 71 and a second insulating plate 72 are provided on the opposite sides of the electrode body 20 in the axial direction. The positive electrode plate 21 is an example of the first electrode plate, and the negative electrode plate 29 is an example of the second electrode plate. The configuration of the positive electrode plate 21 will be described later in detail.

The case 40 is formed in a bottomed cylindrical shape having an opening at its one end (an upper end in FIG. 1). The case 40 accommodates the electrode body 20 and an electrolyte (not illustrated). The case 40 has a stepped portion 41 formed by partially pressing the side wall of the case 40 from the outside. The stepped portion 41 may be formed on the side wall of the case 40 annually in the circumferential direction of the case 40. In this case, the sealing body 50 may be supported on the surface of the stepped portion 41 on the opening side.

The sealing body 50 seals the opening of the case 40. An insulative gasket 81 is provided between the sealing body 50 and the case 40, thereby ensuring sealing properties of the case 40. The sealing body 50 includes a filter 51, a lower valve body 52, an insulating member 53, an upper valve body 54, and a cap 55. In the sealing body 50, these members are stacked in the stated order. The sealing body 50 is attached to the opening of the case 40 such that the cap 55 is located outside the case 40 and the filter 51 is located inside the case 40. Each of the above-described members constituting the sealing body 50 has a disk shape or a ring shape, for example. The members except the insulating member 53 are electrically connected to each other.

The positive electrode tab 61 is attached to a first uncoated portion 24 (described later) of the positive electrode plate 21 to electrically connect the positive electrode plate 21 and the sealing body 50. Specifically, one end of the positive electrode tab 61 is connected to the first uncoated portion 24, and the other end thereof is connected to the cap 55 of the sealing body 50. The positive electrode tab 61 passes through a through hole formed in the first insulating plate 71. In the above configuration, the cap 55 of the sealing body 50 functions as an external positive electrode terminal. Only one positive electrode tab 61 may be provided, or a plurality of positive electrode tabs 61 may be provided. The positive electrode tab 61 is an example of the first electrode tab.

The negative electrode tab 62 is attached to the negative electrode plate 29 to electrically connect the negative electrode plate 29 and the case 40. Specifically, one end of the negative electrode tab 62 is connected to the negative electrode plate 29, and the other end thereof is connected to the inner bottom surface of the case 40. In the above configuration, the case 40 functions as an external negative electrode terminal. Only one negative electrode tab 62 may be provided, or a plurality of negative electrode tabs 62 may be provided.

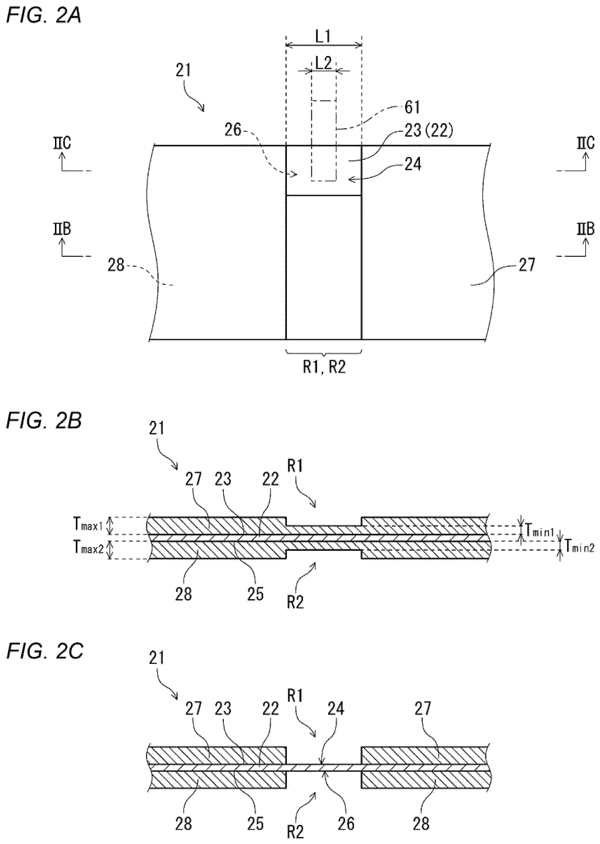

The configuration of the positive electrode plate 21 will be described next in detail with reference to FIGS. 2A to 2C.

As illustrated in FIGS. 2A to 2C, the positive electrode plate 21 includes a current collector 22 in an elongated sheet-like shape having a first main surface 23 and a second main surface 25, a first active material layer 27 provided on the first main surface 23, and a second active material layer 28 provided on the second main surface.

The current collector 22 is constituted by an aluminum foil or an aluminum alloy foil, for example. The longitudinal direction of the current collector 22 corresponds to the transverse direction in FIG. 2A, and the widthwise direction of the current collector 22 corresponds to the vertical direction in FIG. 2A. The longitudinal direction of the current collector 22 matches the winding direction of the electrode body 20, and the widthwise direction of the current collector 22 matches the axial direction of the electrode body 20.

The first active material layer 27 contains a lithium-containing transition metal oxide, a conductive agent, and a binder, for example. The second active material layer 28 has the same composition as the first active material layer 27, for example.

The first main surface 23 of the current collector 22 has a first region R1 that extends in the widthwise direction of the current collector 22 and in which the thickness of the first active material layer 27 is smaller than that at the periphery thereof (specifically, a region adjacent thereto in the longitudinal direction of the current collector 22). The first region R1 extends from one end to the other end of the current collector 22 in the widthwise direction in the first main surface 23. Only one first region R1 may be provided, or a plurality of first regions R1 may be provided. The first region R1 includes a first uncoated portion 24 that is located at one end of the current collector 22 in the widthwise direction and on which the first active material layer 27 is not provided. The first active material layer 27 is provided in a region of the first region R1 other than the first uncoated portion 24.

To the first uncoated portion 24, the positive electrode tab 61 indicated by a two-dot chain line in FIG. 2A is attached, for example, by welding. In the longitudinal direction of current collector 22, a length L1 of the first uncoated portion 24 is larger than a length L2 of the positive electrode tab 61.

A minimum thickness Tmin1 of the first active material layer 27 provided on the first region R1 is 95% or more and 99.5% or less of a maximum thickness Tmax1 of the first active material layer 27.

The second main surface 25 of the current collector 22 has a second region R2 that extends in the widthwise direction of the current collector 22 and in which the thickness of the second active material layer 28 is smaller than that at the periphery thereof (specifically, a region adjacent thereto in the longitudinal direction of the current collector 22). The second region R2 extends from one end to the other end of the current collector 22 in the widthwise direction in the second main surface 25. Only one second region R2 may be provided, or a plurality of second regions R2 may be provided. The second region R2 includes a second uncoated portion 26 that is located at one end of the current collector 22 in the widthwise direction and on which the second active material layer 28 is not provided. The second active material layer 28 is provided in a region of the second region R2 other than the second uncoated portion 26.

A minimum thickness Tmin2 of the second active material layer 28 provided on the second region R2 is 95% or more and 99.5% or less of a maximum thickness Tmax2 of the second active material layer 28.

The second region R2 is located on the back side of the first region R1. In the configuration described above, at least a part (preferably, 90% or more) of the first region R1 overlaps with the second region R2 when viewed in the normal direction of the first main surface 23.

### <Supplemental Remarks>

According to the above description of the embodiment, the following techniques are disclosed.

### (Technique 1)

An electrode plate for power storage device use including:
a current collector in an elongated sheet-like shape having a first main surface and a second main surface; and
a first active material layer provided on the first main surface, wherein
the first main surface has at least one first region that extends in a widthwise direction of the current collector and on which the thickness of the first active material layer is smaller than that at a periphery thereof, and
the first active material layer is provided on at least a part of the first region.

### (Technique 2)

The electrode plate for power storage device use according to Technique 1, wherein the first region has a first uncoated portion that is located at one end in the widthwise direction and on which the first active material layer is not provided.

### (Technique 3)

The electrode plate for power storage device use according to Technique 2, wherein a first electrode tab is attached to the first uncoated portion, and in a longitudinal direction of the current collector, a length of the first uncoated portion is larger than a length of the first electrode tab.

### (Technique 4)

The electrode plate for power storage device use according to any one of Techniques 1 to 3, wherein the first region extends from one end to another end of the first main surface in the widthwise direction.

### (Technique 5)

The electrode plate for power storage device use according to any one of Techniques 1 to 4, wherein a minimum thickness of the first active material layer provided in the first region is 95% or more and 99.5% or less of a maximum thickness of the first active material layer.

### (Technique 6)

The electrode plate for power storage device use according to any one of Techniques 1 to 5, further including a second active material layer provided on the second main surface, wherein
the second main surface has at least one second region that extends in the widthwise direction and on which the thickness of the second active material layer is smaller than that at a periphery thereof, and
the second active material layer is provided on at least a part of the second region.

### (Technique 7)

The electrode plate for power storage device use according to Technique 6, wherein the second region includes a second uncoated portion that is located at one end in the widthwise direction and on which the second active material layer is not provided.

### (Technique 8)

The electrode plate for power storage device use according to Technique 6 or 7, wherein the second region extends from one end to another end of the second main surface in the widthwise direction.

### (Technique 9)

The electrode plate for power storage device use according to any one of Techniques 6 to 8, wherein a minimum thickness of the second active material layer provided in the second region is 95% or more and 99.5% or less of a maximum thickness of the second active material layer.

### (Technique 10)

The electrode plate for power storage device use according to any one of Techniques 6 to 9, wherein at least a part of the first region overlaps with the second region when viewed in a normal direction of the first main surface.

### (Technique 11)

A power storage device including an electrode body formed of a first electrode plate and a second electrode plate wound with a separator therebetween, wherein
the first electrode plate is the electrode plate for power storage device use according to any one of claims 1 to 3.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Industrial Applicability]

The present disclosure is applicable to electrode plates for power storage device use and power storage devices.

### [Reference Signs List]

10: power storage device
   20: electrode body
      21: positive electrode plate (first electrode plate)
         22: current collector
            23: first main surface
               24: first uncoated portion
            25: second main surface
               26: second uncoated portion
         27: first active material layer
         28: second active material layer
      29: positive electrode plate (second electrode plate)
      31: separator
   40: case
      41: stepped portion
   50: sealing body
      51: filter
      52: lower valve body
      53: insulating member
      54: upper valve body
      55: cap
   61: positive electrode tab (first electrode tab)
   62: negative electrode tab
   71: first insulating plate
   72: second insulating plate
   81: gasket
L1: length of first uncoated portion
L2: length of positive electrode tab
R1: first region
R2: second region
Tmin1: minimum thickness of first active material layer
Tmin2: maximum thickness of first active material layer
Tmax1: minimum thickness of second active material layer
Tmax2: maximum thickness of second active material layer

## Claims

1. An electrode plate for power storage device use comprising:
a current collector in an elongated sheet-like shape having a first main surface and a second main surface; and
a first active material layer provided on the first main surface, wherein
the first main surface has at least one first region that extends in a widthwise direction of the current collector and on which the thickness of the first active material layer is smaller than that at a periphery thereof, and
the first active material layer is provided on at least a part of the first region.

2. The electrode plate for power storage device use according to claim 1, wherein
the first region has a first uncoated portion that is located at one end in the widthwise direction and on which the first active material layer is not provided.

3. The electrode plate for power storage device use according to claim 2, wherein
a first electrode tab is attached to the first uncoated portion, and
in a longitudinal direction of the current collector, a length of the first uncoated portion is larger than a length of the first electrode tab.

4. The electrode plate for power storage device use according to any one of claims 1 to 3, wherein
the first region extends from one end to another end of the first main surface in the widthwise direction.

5. The electrode plate for power storage device use according to any one of claims 1 to 3, wherein
a minimum thickness of the first active material layer provided in the first region is 95% or more and 99.5% or less of a maximum thickness of the first active material layer.

6. The electrode plate for power storage device use according to any one of claims 1 to 3, further comprising
a second active material layer provided on the second main surface, wherein
the second main surface has at least one second region that extends in the widthwise direction and on which the thickness of the second active material layer is smaller than that at a periphery thereof, and
the second active material layer is provided on at least a part of the second region.

7. The electrode plate for power storage device use according to claim 6, wherein
the second region includes a second uncoated portion that is located at one end in the widthwise direction and on which the second active material layer is not provided.

8. The electrode plate for power storage device use according to claim 6, wherein
the second region extends from one end to another end of the second main surface in the widthwise direction.

9. The electrode plate for power storage device use according to claim 6, wherein
a minimum thickness of the second active material layer provided in the second region is 95% or more and 99.5% or less of a maximum thickness of the second active material layer.

10. The electrode plate for power storage device use according to claim 6, wherein
at least a part of the first region overlaps with the second region when viewed in a normal direction of the first main surface.

11. A power storage device comprising:
an electrode body formed of a first electrode plate and a second electrode plate wound with a separator therebetween, wherein
the first electrode plate is the electrode plate for power storage device use according to any one of claims 1 to 3.
